# DEMANDE DE BREVET EUROPEEN

(11) **EP 3 753 711 A1**
(43) Date de publication de la demande: **23.12.2020**
(21) Numéro de dépôt: 20180314.5
(22) Date de dépôt: 16.06.2020
(51) Int. Cl.: B29C 65/18, B29C 65/20, B29C 65/74, B29C 65/30

(54) **PROCÉDÉ DE COMPRESSION D'UN TUBE DÉFORMABLE**

(30) Priorité: 19.06.2019 FR 1906573
(71) Demandeur: MGA Technologies, 69380 Civrieux d'Azergues (FR)
(72) Inventeur: de MALLIARD, Hervé, 69160 Tassin la Demi-Lune (FR)
(74) Mandataire: Delorme, Nicolas

(57) **Abrégé**

Procédé de compression permettant de compresser au moins un tube (10) présentant une paroi externe (102) et un axe longitudinal (101), déformable selon une direction transversale (103) et empli de composés liquides, ledit procédé comportant une étape de déformation de la paroi externe (102) du tube (10) selon la direction transversale (103), ladite déformation étant effectuée progressivement selon l'axe longitudinal (101) à partir d'une portion centrale (104) du tube (10), de manière à expulser les composés liquides hors de ladite portion centrale (104) du tube (10).

## Description

La présente invention se rapporte à un procédé de compression de compression permettant d'obturer au moins un tube déformable jusqu'à le rendre étanche à l'écoulement.

Elle concerne également une machine de déconnexion et une machine de connexion mettant en œuvre un tel procédé de compression.

Dans les domaines pharmaceutique ou biomédical, il est connu de réaliser des opérations de connexion ou de déconnexion de tubes flexibles, par exemple des tubes en matière thermoplastique élastomère, dans lesquels peuvent circuler des flux de liquides.

Par exemple, une opération de connexion peut permettre de connecter entre eux deux contenants en réalisant une connexion bout-à-bout entre un premier tube relié au premier contenant et un deuxième tube relié au deuxième contenant.

A l'inverse, une opération de déconnexion peut permettre d'isoler un réservoir stockant des composés toxiques en obstruant, et éventuellement en sectionnant, le tube déversant ces composés toxiques dans le réservoir.

Ces deux opérations, bien qu'ayant des objectifs opposés, présentent une étape identique de compression du tube à connecter ou à déconnecter, de manière à obturer une portion centrale de ce dernier :
- dans le cadre d'une opération de connexion, cette portion centrale est ensuite sectionnée et partiellement fondue à l'aide d'une lame chauffante, afin de pouvoir connecter par thermo-soudure les tronçons ainsi obtenus à d'autres tubes,
- dans le cadre d'une opération de déconnexion, cette portion centrale est fondue à l'aide d'un dispositif chauffant afin d'obturer de manière permanente le tube (il est ensuite possible de sectionner le tube ainsi obturé).

Dans ces deux cas, cette étape de compression permet d'expulser, avant toute opération de section ou de fusion, les composés liquides circulant dans le tube hors de la portion centrale.

En effet, la présence de ces composés liquides peut nuire à la qualité de la soudure effectuée au cours d'une opération de déconnexion.

De même, si au cours d'une opération de connexion, la section du tube est réalisée alors que des composés liquides sont encore présents dans la portion centrale du tube, ceux-ci peuvent se répandre dans le milieu extérieur, entraînant ainsi des risques élevés de pollution du milieu extérieur et de dégradation des équipements et des machines utilisés pour l'opération de connexion.

Il est donc nécessaire que l'étape de compression du tube soit réalisée de manière à complètement évacuer les composés liquides hors de la portion centrale du tube.

Or, cette étape de compression est généralement réalisée par le déplacement d'un organe de compression permettant de déformer la paroi externe du tube, cet organe de compression présentant une surface de contact avec le tube parallèle à la paroi externe de ce dernier.

Par exemple, le document EP2419257 décrit la compression de deux tubes par deux étaux déplaçables selon une direction transversale.

Cependant, il est impossible de garantir une parfaite planéité de cette surface, du fait des imprécisions inhérentes à tout processus de fabrication industrielle : dans le cas où cette surface de contact présenterait un profil très légèrement concave, cette imperfection de fabrication aurait pour conséquence de maintenir des composés liquides dans la portion centrale du tube.

De même, lorsque l'étape de compression consiste à déformer le tube dans deux zones de compression distinctes de part et d'autre de la portion centrale (comme cela est le cas dans le cadre des opérations de connexion, la section du tube étant effectuée entre ces deux zones de compression), il peut être difficile de s'assurer qu'aucun composé liquide ne reste présent dans cette portion centrale.

La présente invention a pour but de résoudre en tout ou partie cet inconvénient, en proposant un procédé de compression permettant de garantir l'expulsion complète de tout composé liquide hors de la portion centrale du tube.

Un autre but de l'invention est de proposer un procédé de compression qui puisse être mis en œuvre indifféremment lors d'une opération de connexion ou d'une opération de déconnexion.

Encore un autre but de l'invention est de proposer une machine de connexion et une machine de déconnexion mettant en œuvre un tel procédé, et qui soient simples de conception et de fabrication.

A cet effet, elle propose un procédé de compression permettant de compresser au moins un tube présentant une paroi externe et un axe longitudinal, déformable selon une direction transversale et empli de composés liquides, ledit procédé comportant une étape de déformation de la paroi externe du tube selon la direction transversale, ladite déformation étant effectuée progressivement selon l'axe longitudinal à partir d'une portion centrale du tube, de manière à expulser les composés liquides hors de ladite portion centrale du tube, la déformation de la paroi externe du tube étant effectuée par le déplacement par rapport au tube d'un organe de compression selon la direction transversale, ledit organe de compression comportant au moins une surface de contact comprenant une portion inclinée par rapport à l'axe longitudinal, la surface de contact étant destinée à être mise en contact avec la paroi externe du tube, et dont la forme est adaptée pour expulser les composés liquides hors de la portion centrale du tube.

En d'autres termes, le procédé de compression selon l'invention consiste à déformer en premier lieu la paroi externe de la portion centrale du tube dans la direction transversale, puis à déformer en second lieu la paroi externe d'une portion latérale adjacente, également dans la direction transversale.

La déformation de cette portion latérale est effectuée de manière progressive, en s'éloignant de la portion centrale selon l'axe longitudinal du tube : les zones de la paroi externe de cette portion latérale les plus proches de la portion centrale subissent donc une déformation avant celles situées plus loin de la portion centrale.

Le résultat de cette déformation progressive est que les composés liquides présents dans la portion latérale (incluant les composés liquides initialement présents dans la portion latérale ainsi que ceux ayant été chassés de la portion centrale par la compression antérieure de cette dernière) sont expulsés selon l'axe longitudinal du tube, dans une direction opposée à la portion centrale.

Ainsi, la déformation progressive de la portion latérale permet de diriger les composés liquides de plus en plus loin de la portion centrale et de s'assurer que, une fois la compression de cette dernière achevée, aucun composé liquide ne reste présent dans cette portion centrale : la déformation progressive permet bien à la fois d'expulser les composés liquides présents initialement dans la portion centrale hors de celle-ci, et également d'empêcher ceux présents initialement dans la portion latérale de s'y déplacer au cours de la compression.

Dans un mode de réalisation, la déformation de la paroi externe du tube est effectuée de part et d'autre de la portion centrale, de manière à expulser les composés liquides hors de ladite portion centrale dans une première direction d'expulsion et une deuxième direction d'expulsion opposées et colinéaires à l'axe longitudinal du tube.

Ce mode de réalisation consiste ainsi à déformer (toujours selon la direction transversale) la paroi externe du tube au niveau de deux portions latérales situées des deux côtés de la portion centrale et adjacentes à celle-ci, progressivement en s'éloignant de la portion centrale.

Le sens de progression, selon l'axe longitudinal, de la déformation de chacune des deux portions latérales sont donc opposés l'un à l'autre.

Pendant cette déformation progressive (et à l'issue de celle-ci) de de part et d'autre de la portion centrale, la paroi externe du tube a une forme convexe, bombée vers l'intérieur du tube au niveau de la portion centrale : les composés liquides sont donc bien repoussés de la portion centrale selon deux directions d'expulsions opposées.

Selon une possibilité, la déformation de la paroi externe du tube est effectuée symétriquement de part et d'autre de la portion centrale.

Selon une caractéristique, la déformation de la paroi externe du tube est effectuée :
- dans un premier temps, d'un premier côté de la portion centrale afin d'expulser les composés liquides hors de ladite portion centrale dans la première direction d'expulsion, et
- dans un deuxième temps, d'un deuxième côté de la portion centrale afin d'expulser les composés liquides hors de ladite portion centrale dans la deuxième direction d'expulsion.

Cette caractéristique permet d'éviter que ces composés liquides ne se trouvent maintenus dans la portion centrale par les déformations simultanées de part et d'autre de celle-ci.

Ce cas de figure peut par exemple se présenter dans le cas d'une opération de connexion, au cours de laquelle la portion centrale est déformée au niveau de ses deux extrémités (adjacentes aux portions latérales) mais pas en son centre, afin de pouvoir sectionner cette portion centrale avec une lame chauffante à l'issue de sa compression : si la déformation à chacune de ces extrémités est symétrique, les composés présents au centre de la portion centrale (c'est-à-dire à l'endroit où aura lieu la section du tube par la lame chauffante) sont maintenus dans cette portion centrale.

En compressant d'abord une des extrémités de la portion centrale (et, progressivement, la portion latérale adjacente) avant l'autre, les composés liquides présents au centre de la portion centrale seront expulsés dans la deuxième direction d'expulsion après la déformation ultérieure de la deuxième portion latérale.

Dans un mode de réalisation, la déformation de la paroi externe du tube est effectuée par le déplacement par rapport au tube d'un organe de compression selon la direction transversale, ledit organe de compression comportant au moins une surface de contact destinée à être mise en contact avec la paroi externe du tube et dont la forme est adaptée pour expulser les composés liquides hors de la portion centrale du tube.

Une très grande variété de réalisations sont possibles concernant cet organe de compression, qui peut, par exemple, prendre la forme d'un étau ou d'une pince et être réalisé en métal.

Cet organe de compression doit être apte à être déplacé selon la direction transversale et à appliquer sur la paroi externe du tube une contrainte suffisante pour déformer cette dernière.

La surface de contact de l'organe de compression doit présenter une forme adaptée pour que le déplacement de cet organe de compression selon la direction transversale provoque la déformation progressive de la paroi externe du tube telle que précédemment décrite.

Dans les modes de réalisations dans lesquels la paroi externe du tube est déformée de part et d'autre de la portion centrale, il est avantageux que la surface de contact de l'organe de compression présente une forme globalement convexe, afin que son déplacement déforme la paroi externe dans cette même forme globalement convexe et permette d'expulser les composés liquides hors de la portion centrale.

Différentes formes et modes de réalisations envisagés concernant cette surface de contact seront davantage décrits plus bas.

L'invention se rapporte également à une machine de déconnexion mettant en œuvre un procédé de compression tel que précédemment décrit, ladite machine de déconnexion comportant un dispositif chauffant conçu pour faire fondre la portion centrale du tube, de manière à obturer ledit tube, une fois les composés liquides expulsés hors de la portion centrale dudit tube.

Il est envisageable que le dispositif chauffant comporte, par exemple, une résistance électrique.

Il est envisageable que la machine de déconnexion comporte un organe de section, adapté pour sectionner la portion centrale du tube ainsi obturée.

Selon une caractéristique, la machine de déconnexion comporte un organe de compression déplaçable par rapport au tube selon la direction transversale et présentant une surface de contact destinée à être mise en contact avec la paroi externe du tube, ladite surface de contact comportant une première portion inclinée et une deuxième portion inclinée par rapport à l'axe longitudinal, adjacentes et disposées de manière que la surface de contact présente une zone de premier contact avec la paroi externe du tube située à la jonction de la première portion inclinée et de la deuxième portion inclinée.

De la sorte, la surface de contact de l'organe de compression présente une forme adaptée pour déformer la paroi externe du tube, de manière à expulser les composés liquides hors de la portion centrale du tube.

En effet, cette surface de contact est de forme globalement convexe et en forme de « V » : en positionnant l'intersection des deux « branches » de ce « V » contre la portion centrale du tube puis en déplaçant l'organe de compression selon la direction transversale, il est possible d'expulser les composés liquides hors de cette même portion centrale du tube, tel que précédemment décrit.

Il est à noter que ces composés liquides sont expulsés selon deux directions d'expulsion opposées, colinéaires à l'axe longitudinal du tube.

Selon une possibilité, la première portion inclinée et la deuxième portion inclinée sont planes et symétriques par rapport à un plan de symétrie orthogonal à l'axe longitudinal du tube.

Dans ce cas, l'expulsion des composés liquides selon les deux directions d'expulsion est elle-même symétrique par rapport au plan de symétrie.

Dans un mode de réalisation, la première portion inclinée et la deuxième portion inclinée sont disposées, selon l'axe longitudinal, de part et d'autre du dispositif chauffant.

Ainsi, le dispositif chauffant est mis en contact avec la paroi externe du tube au cours du déplacement de l'organe de compression permettant la déformation de cette même paroi externe.

Il est ainsi possible de réaliser, en commandant uniquement le déplacement de l'organe de compression, l'évacuation des composés liquides hors de la portion centrale du tube et le positionnement du dispositif chauffant, en vue de l'obturation définitive du tube. Le placement du dispositif chauffant entre les deux portions inclinées permet de s'assurer que l'obturation du tube puisse bien avoir lieu dans une zone de la portion centrale hors de laquelle les composés liquides ont été préalablement expulsés (selon les deux directions d'expulsion opposées), garantissant ainsi une meilleure qualité de cette obturation et éliminant tout risque de contamination du milieu extérieur par ces mêmes composés liquides.

Selon une caractéristique, la machine de déconnexion comporte un organe de compression suplémentaire présentant une surface de contact identique à la surface de contact de l'organe de compression, les surfaces de contact de l'organe de compression et de l'organe de compression supplémentaire étant disposées symétriquement l'une à l'autre par rapport à l'axe longitudinal.

La présence de cet organe de compression supplémentaire permet d'assurer une meilleure expulsion des composés liquides de la portion centrale du tube.

L'invention concerne également une machine de connexion mettant en œuvre un procédé de compression tel que précédemment décrit, comportant une lame chauffante conçue pour faire fondre, au moins partiellement, et sectionner la portion de centrale du tube une fois celle-ci déformée dans la direction transversale.

Dans un mode de réalisation, la machine de connexion comporte un premier organe de compression et un deuxième organe de compression, déplaçables par rapport au tube selon la direction transversale et étant conçus pour expulser les composés liquides hors de la portion centrale du tube respectivement selon une première direction d'expulsion et une deuxième direction d'expulsion opposées et colinéaires à l'axe longitudinal.

Ce premier organe de compression et ce deuxième organe de compression peuvent, par exemple, être constitués d'un étau ou d'une pince dont les mors sont déplaçables par rapport au tube selon la direction transversale.

Selon une caractéristique, le premier organe de compression et le deuxième organe de compression sont disposés à proximité de la portion centrale du tube et l'un après l'autre selon l'axe longitudinal de ce dernier.

Il est envisageable que le premier organe de compression et le deuxième organe de compression soient symétriques par rapport à un plan orthogonal à l'axe longitudinal du tube et passant par la portion centrale dudit tube.

Selon une caractéritique, la zone de premier contact du premier organe de compression et celle du deuxième organe de compression sont séparées par une distance d'écartement non nulle le long de l'axe longitudinal du tube : en choisissant une lame chauffante dont l'épaisseur est inférieure à cette distance d'écartement, il est possible de déplacer celle-ci entre le premier organe de compression et le deuxième organe de compression afin de sectionner et faire fondre partiellement la paroi externe du tube au niveau de la portion centrale.

Avantageusement, la forme de ce premier organe de compression et de ce deuxième organe de compression est adaptée pour permettre la déformation progressive du tube selon son axe longitudinal, comme décrit plus haut, afin d'expulser les composés liquides présents dans la portion centrale du tube hors de celle-ci.

Selon un mode de réalisation, chacun du premier organe de compression et du deuxième organe de compression présente une surface de contact destinée à être mise en contact avec la paroi externe du tube, ladite surface de contact comportant :
- une zone de premier contact avec la paroi externe du tube, et
- une portion inclinée par rapport à l'axe longitudinal, plane et juxtaposée à la zone de premier contact respectivement selon la première direction d'expulsion et la deuxième direction d'expulsion, ladite portion inclinée étant adaptée pour expulser les composés liquides hors de la portion centrale du tube respectivement selon ladite première direction d'expulsion et ladite deuxième direction d'expulsion.

Au cours du déplacement de chacun du premier organe de compression et du deuxième organe de compression, la zone de premier contact est ainsi mise en contact avec la paroi externe du tube au niveau de la portion centrale de celui-ci avant que la portion inclinée ne soit elle-même mise en contact avec cette même paroi externe.

Une fois ce premier contact effectué, le déplacement du premier organe de compression et du deuxième organe de compression selon la direction transversale permet de progressivement mettre en contact la portion inclinée avec la paroi externe. Concernant le premier organe de compression, la portion inclinée est mise en contact avec la paroi externe de manière progressive en partant de la zone de jonction entre cette même portion inclinée et la zone de premier contact, en s'éloignant de la portion centrale dans la première direction d'expulsion.

De même, dans le cas du deuxième organe de compression, la portion inclinée est mise en contact avec la paroi externe de manière progressive en partant de la zone de jonction entre cette même portion inclinée et la zone de premier contact, en s'éloignant de la portion centrale dans la deuxième direction d'expulsion.

De la sorte, le déplacement de ces deux organes de compression selon la direction transversale permet bien de déformer progressivement la paroi externe du tube pour expulser les composés liquides présents dans la portion centrale du tube: ces composés liquides sont ainsi expulsés de part et d'autre de la portion centrale, selon la première et la deuxième direction d'expulsion opposées.

Selon une possibilité, la zone de premier contact du premier organe de compression ou du deuxième organe de compression présente une surface plane parallèle à la paroi externe du tube.

Dans un mode de réalisation, la surface de contact du premier organe de compression et/ou du deuxième organe de compression présente un traitement de surface adapté pour diminuer l'intensité des frottements mécaniques entre lesdits premier organe de compression et deuxième organe de compression et la paroi externe du tube.

Cette caractéristique permet d'éviter que la paroi externe du tube n'« accroche » à la surface de contact du premier organe de compression ou du deuxième organe de compression.

En effet, une fois la compression et la déformation de la paroi externe du tube effectuée, ces organes de compression sont à nouveau déplacés selon la direction transversale (dans le sens inverse au premier mouvement de compression) de manière à libérer le tube ainsi déformé : il est nécessaire que, durant cette étape, la paroi externe du tube n'adhère pas à la surface de contact de chacun du premier organe de compression et du deuxième organe de compression.

Dans un autre mode de réalisation, la surface de contact du premier organe de compression et/ou du deuxième organe de compression présente un traitement de surface adapté pour diminuer l'effusivité thermique desdits premier organe de compression et deuxième organe de compression.

Cette caractéristique permet de diminuer les pertes énergétiques de la machine de connexion.

En effet, comme précédemment décrit, la machine de connexion comporte une lame chauffante portée à une haute température en vue d'entraîner la fusion partielle de la portion centrale du tube.

Cette lame chauffante étant usuellement disposée à proximité immédiate du premier organe de compression et du deuxième organe de compression, par exemple entre ces derniers, de la chaleur est transmise entre la lame chauffante et les deux organes de compression.

Le traitement de surface du premier organe de compression ou du deuxième organe de compression permet ainsi d'isoler thermiquement la lame chauffante en réduisant la quantité de chaleur transmise à ceux-ci : il est donc possible de maintenir la lame chauffante à une température élevée avec une dissipation énergétique moindre.

D'autres caractéristiques et avantages de la présente invention apparaîtront à la lecture de la description détaillée ci-après, d'un exemple de mise en œuvre non limitatif, faite en référence aux Figures annexées dans lesquelles :
[Fig. 1] est une vue d'un organe de compression d'une machine de déconnexion selon l'invention,
[Fig. 2] est une représentation schématique d'une première étape de compression d'un tube dans une machine de déconnexion selon un premier mode de réalisation,
[Fig. 3] est une représentation schématique d'une deuxième étape de compression d'un tube dans une machine de déconnexion selon un premier mode de réalisation,
[Fig. 4] est une représentation schématique d'une étape de compression d'un tube dans une machine de déconnexion selon un deuxième mode de réalisation,
[Fig. 5] est une vue de détail d'une machine de connexion selon l'invention,
[Fig. 6] est une vue d'une surface de contact d'un organe de compression,
[Fig. 7] est une représentation schématique d'une première étape de compression d'un tube,
[Fig. 8] est une représentation schématique d'une deuxième étape de compression d'un tube.

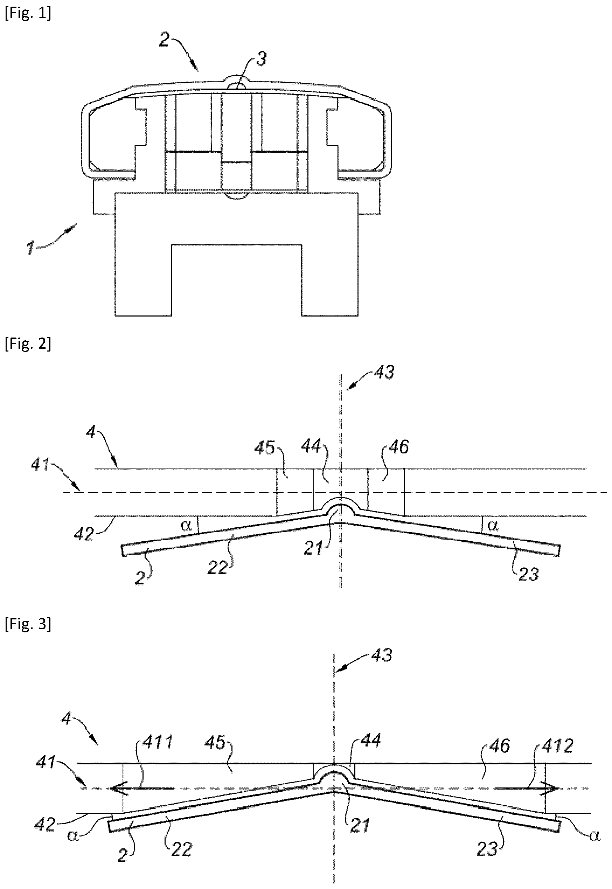

La figure 1 représente un organe de compression 1 d'une machine de déconnexion (non représentée) adaptée pour réaliser une opération de déconnexion d'un tube déformable et mettant en œuvre le procédé de compression d'un tube selon l'invention.

Cet organe de compression 1 présente une surface de contact 2 et un dispositif chauffant 3.

Ce dispositif chauffant 3 est constitué d'une résistance chauffante à travers laquelle un courant électrique peut circuler, faisant augmenter par effet Joule la température de cette résistance chauffante au-delà de la température de fusion du tube à déconnecter. La forme particulière de la surface de contact 2 est visible sur les figures 2 et 3 suivantes, la figure 2 illustrant une première étape du processus de compression d'un tube 4 et la figure 3 illustrant une deuxième étape ultérieure du même processus de compression du même tube 4.

Ce tube 4 présente un axe longitudinal 41 et une paroi externe 42, cette paroi externe étant déformable selon une direction transversale 43 orthogonale à l'axe longitudinal 41.

La surface de contact 2 présente une zone de premier contact 21, une première portion inclinée 22 et une deuxième portion inclinée 23.

La zone de premier contact 21 est disposée à la jonction de la première portion inclinée 22 avec la deuxième portion inclinée 23, et chacune de cette première portion inclinée 22 et cette deuxième portion inclinée 23 forme un angle α de mesure non nulle avec la direction de l'axe longitudinal 41.

Cette structure de la surface de contact 2 est particulièrement adaptée pour expulser des composés liquides présents dans une portion centrale 44 du tube 4, cette expulsion constituant une étape préalable à l'opération de déconnexion.

En effet, le déplacement de la surface de contact 2 selon la direction transversale 43 par rapport au tube 4 permet de déformer la paroi externe 42 de manière à expulser les composés liquides hors de la portion centrale 44.

Il est à noter que, pour réaliser cette déformation, il est envisageable que le tube 4 soit immobile et que le déplacement de la surface de contact 2 soit effectué grâce à un système d'actionnement, ou que la surface de contact 2 soit immobile et que le déplacement du tube 4 soit effectué grâce à un système d'actionnement, ou encore que à la fois le tube 4 et la surface de contact 2 soient mis simultanément en mouvement selon la direction transversale 43.

Le processus de compression et de déformation du tube 4 comporte ainsi plusieurs étapes successives :
- une première étape initiale, dans laquelle la surface de contact 2 est déplacée selon la direction transversale 43 de manière à être rapprochée de la paroi externe 42, sans que ces deux éléments ne soient encore en contact ;
- une étape de premier contact, durant laquelle la zone de premier contact 21 est mise en contact avec la paroi externe 42, déformant ainsi cette dernière au niveau de la portion centrale 44, sans que la première portion inclinée 22 ou la deuxième portion inclinée 23 ne soient encore en contact avec la paroi externe 42 ;
- une étape de déformation intermédiaire, illustrée par la figure 2, dans laquelle la première portion inclinée 22 est mise en contact avec la paroi externe 42, déformant ainsi cette dernière au niveau d'une première portion latérale 45 du tube 4, et dans laquelle la deuxième portion inclinée 23 est également mise en contact avec la paroi externe 42, déformant ainsi cette dernière au niveau d'une deuxième portion latérale 46 du tube 4, ces portions latérales 45 et 46 étant situées de part et d'autre de la portion centrale 44 ;
- une étape finale, illustrée par la figure 3, dans laquelle la paroi externe 42 est déformée de manière à complètement obturer le tube 4.

Il est important de noter que, au cours de ce processus de compression, la déformation de la première portion latérale 45 et de la deuxième portion latérale 46 est effectuée de manière progressive selon l'axe longitudinal 41, en partant de la portion centrale 44, au fur et à mesure du déplacement selon la direction transversale 43 de la première portion inclinée 22 et de la deuxième portion inclinée 23.

Cette déformation progressive a pour effet d'expulser les composés liquides présents dans le tube 4, et en particulier ceux présents dans la portion centrale 44 de celui-ci, selon une première direction d'expulsion 411 et une deuxième direction d'expulsion 412, celles-ci étant opposées et colinéaires à l'axe longitudinal 41.

De la sorte, à l'issue de la déformation de la paroi externe 42 représentée par la figure 3, tous les composés liquides ont été expulsés hors de la portion centrale 44, rendant ainsi possible d'effectuer des opérations de fusion et/ou de section de cette portion centrale 44 sans risque de propagation des composés liquides dans le milieu extérieur. Il est avantageux que la mesure de l'angle a, caractérisant l'inclinaison de la première portion inclinée 22 et de de la deuxième portion inclinée 23 par rapport à l'axe longitudinal 41, soit faible, afin que la déformation de la première portion latérale 45 et de la deuxième portion latérale 46 soit la plus progressive possible.

Par exemple, la mesure de cet angle α peut être comprise entre 1° et 10°.

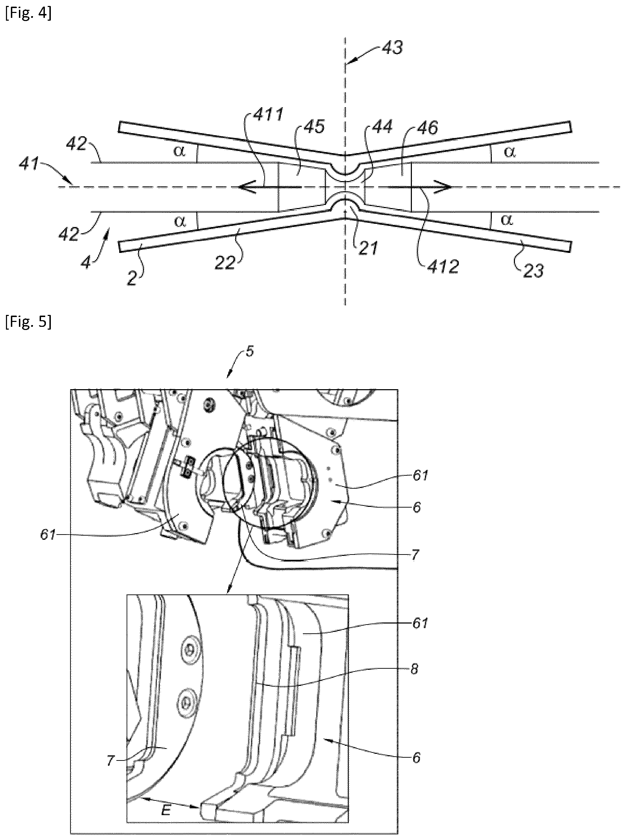

La figure 4 représente un deuxième mode de réalisation d'une machine de déconnexion selon l'invention, comportant un organe de compression supplémentaire 1' (non représenté), présentant une surface de contact 2' identique à la surface de contact 2, les surfaces de contact 2 et 2' étant disposée symétriquement par rapport à l'axe longitudinal 41.

Dans ce mode de réalisation, ces surfaces de contact 2 et 2' restent symétriques par rapport à cet axe longitudinal 41 au cours du procédé de compression selon l'invention : la surface de contact 2' déforme donc la paroi externe 42 du tube 4 de manière symétrique à la surface de contact 2.

Cette déformation symétrique de la paroi externe 42, d'abord au niveau de la portion centrale 44 puis vers les portions latérales 45 et 46 jusqu'à obturation complète du tube 4, provoque également l'expulsion des composés liquides présents dans la portion centrale 44 hors de cette dernière, selon la première direction d'expulsion 411 et la deuxième direction d'expulsion 412.

Ainsi, la présence de l'organe de compression supplémentaire 1' permet de s'assurer d'une meilleure expulsion desdits composés liquides hors de la portion centrale 44.
Les figures 5, 6 et 7 suivantes concernent une machine de connexion, permettant par exemple de joindre bout à bout deux tubes déformables.
La figure 5 représente une portion d'une machine de connexion 5 mettant en œuvre le procédé de compression d'un tube selon l'invention.

Cette machine de connexion 5 comporte un premier organe de compression 6 et un deuxième organe de compression 7, séparés par une distance d'écartement E.

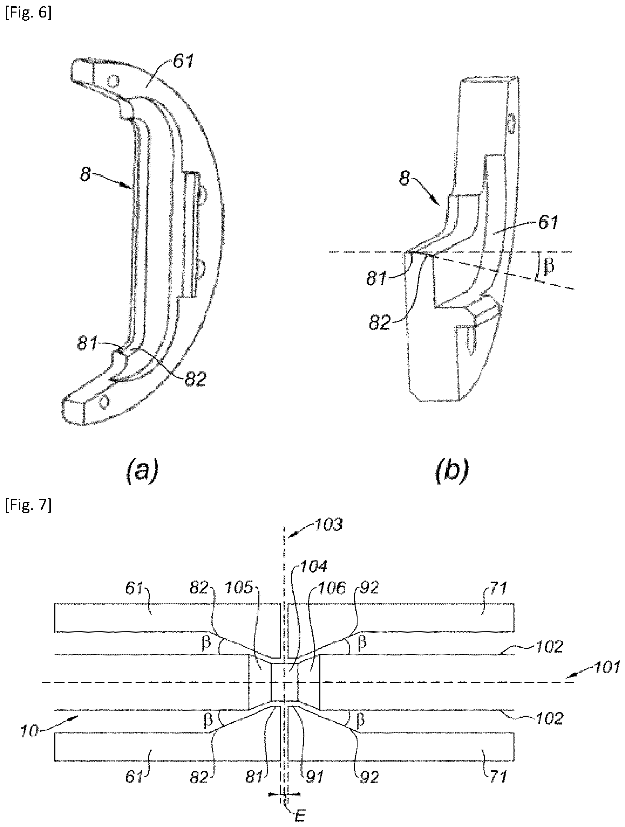

Chacun de ce premier organe de compression 6 et ce deuxième organe de compression 7 prend ici la forme d'une pince comportant deux mors déplaçables entre une configuration ouverte, dans laquelle ceux-ci ne sont pas en contact, et une configuration fermée (illustrée par la figure 6), dans laquelle ils sont en contact l'un avec l'autre.

Par exemple, le premier organe de compression 6, visible sur la figure 5 en configuration ouverte, est formé de deux mors 61 symétriques l'un par rapport à l'autre.

Chacun de ces mors 61 comporte une surface de contact 8, destinée à être mise en contact avec un tube déformable.

De même, le deuxième organe de compression 7 comporte deux mors 71 l'un par rapport à l'autre, chacun d'entre eux présentant une surface de contact 9 destinée à être mise ne contact avec le même tube déformable.

La figure 6 comprend deux vues de détail d'un mors 61 permettant d'identifier deux portions de la surface de contact 8 :
- une zone de premier contact 81, et
- une portion inclinée 82, formant avec la zone de premier contact 81 un angle β de mesure non nulle.

De même, la surface de contact 9 de chacun des mors 71 (visibles sur la figure 7) présente une zone de premier contact 91 et une portion inclinée 92, cette dernière formant avec la zone de premier contact 81 l'angle β.

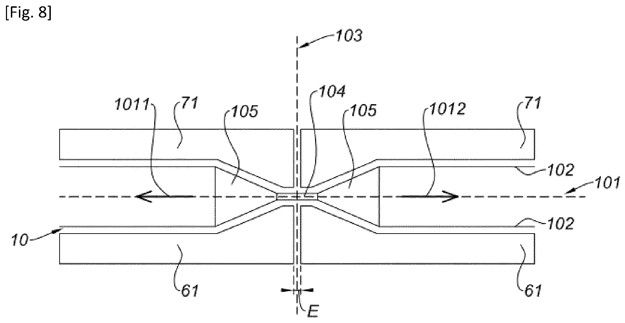

Les figures 7 et 8 suivantes illustrent un procédé de compression d'un tube 10 disposé entre les mors 61 et 71 du premier organe de compression 6 et du deuxième organe de compression 7.

Ce tube 10 présente un axe longitudinal 101 et une paroi externe 102, cette paroi externe étant déformable selon une direction transversale 103 orthogonale à l'axe longitudinal 101.

Le mouvement de fermeture du premier organe de compression 6 et du deuxième organe de compression 7 permet d'expulser les composés liquides présents à l'intérieur du tube 10 hors d'une portion centrale 104 de ce dernier.

En effet, le passage des mors 71 et 61 de leur configuration ouverte à leur configuration fermée a pour conséquence de déplacer les surfaces de contact 8 et 9 de ces derniers selon la direction longitudinale.

Le rapprochement de ces surfaces de contact 8 et 9 provoque une déformation particulière de la paroi externe 102 du tube 10 permettant d'expulser les composés liquides hors de la portion centrale 104.

De la même manière que décrit dans le mode de réalisation précédent concernant la machine de déconnexion, le processus de compression du tube 10 par la machine de connexion 5 comporte plusieurs étapes successives au cours du mouvement de rapprochement des deux mors 61 entre eux et 71 entre eux :
- une première étape initiale, dans laquelle les mors 61 sont déplacés selon la direction transversale en se rapprochant l'un de l'autre, mais dans laquelle les surfaces de contact 8 et 9 ne sont pas encore en contact avec la paroi externe 102 ;
- une étape de premier contact, durant laquelle les zones de premier contact 81 et 92 sont mises en contact avec la paroi externe 102, déformant ainsi cette dernière au niveau de la portion centrale 104, sans que les portions inclinées 82 et 92 ne soient encore en contact avec la paroi externe 102 ;
- une étape de déformation intermédiaire, illustrée par la figure 6, dans laquelle les portions inclinées 82 sont mises en contact avec la paroi externe 102, déformant ainsi cette dernière au niveau d'une première portion latérale 105 du tube 10, et dans laquelle les portions inclinées 92 sont mises en contact avec la paroi externe 42, déformant ainsi cette dernière au niveau d'une deuxième portion latérale 106 du tube 10, ces portions latérales 105 et 106 étant situées de part et d'autre de la portion centrale 104 ;
- une étape finale, illustrée par la figure 8, dans laquelle le premier organe de compression 6 et le deuxième organe de compression 7 sont en configuration fermée, la paroi externe 102 étant déformée de manière à complètement obturer le tube 10. De même que précédemment, au cours de ce processus de compression, la déformation de la première portion latérale 105 et de la deuxième portion latérale 106 est effectuée de manière progressive selon l'axe longitudinal 101, en partant de la portion centrale 104, au fur et à mesure du déplacement selon la direction transversale 103 des portions inclinées 82 et 92.

Cette déformation progressive a pour effet d'expulser les composés liquides présents dans le tube 4, et en particulier ceux présents dans la portion centrale 104 de celui-ci, selon une première direction d'expulsion 1011 et une deuxième direction d'expulsion 1012, celles-ci étant opposées et colinéaires à l'axe longitudinal 101.

De la sorte, à l'issue de la déformation de la paroi externe 102 représentée par la figure 8, tous les composés liquides ont été expulsés hors de la portion centrale 104, rendant ainsi possible d'effectuer une opération de connexion comportant des étapes de fusion et de section de cette portion centrale 104, sans risque de propagation des composés liquides dans le milieu extérieur.

Il est envisageable que cette opération de section soit réalisée par le déplacement d'une lame chauffante selon la direction transversale 103, dans l'espace séparant les mors 61 des mors 71 : il est alors nécessaire que l'épaisseur de cette lame chauffante soit inférieure à la distance d'écartement E.

Il est par ailleurs à noter que, du fait du positionnement du tube 10 par rapport aux mors 61 et 71, en plaçant l'axe longitudinal 101 parallèle aux zones de premier contact 81 et 91, les portions inclinées 82 et 92 forment avec ce même axe longitudinal 101 l'angle β.

Il est également envisageable que le mouvement de fermeture du premier organe de compression 6 (c'est-à-dire de rapprochement des surfaces de contact 8 selon la direction transversale 103) et celui du deuxième organe de compression 7 ne soient pas simultanés : dans le cas où la fermeture du premier organe de compression 6 est effectuée en premier, les composés liquides présents dans la portion centrale 104 et dans la première portion latérale 105 sont d'abord expulsés selon la première direction d'expulsion 1011, avant que la fermeture du deuxième organe de compression 7 ne provoque l'expulsion des composés liquides encore présents dans la portion centrale 104 et dans la deuxième portion latérale 106 selon la deuxième direction d'expulsion 1012.

Ainsi, la forme particulière des organes de compression mis en œuvre dans les processus précédemment décrits de compression d'un tube permet bien de déformer progressivement la paroi externe de ce même tube afin de garantir qu'aucun composé liquide ne reste présent dans la portion centrale du tube à l'issue de ce processus de compression.

## Revendications

1. Procédé de compression permettant de compresser au moins un tube (4,10) présentant une paroi externe (42,102) et un axe longitudinal (41,101), déformable selon une direction transversale (43, 103) et empli de composés liquides, ledit procédé comportant une étape de déformation de la paroi externe (42,102) du tube (4,10) selon la direction transversale (43, 103), ladite déformation étant effectuée progressivement selon l'axe longitudinal (41,101) à partir d'une portion centrale (44, 104) du tube (4,10), de manière à expulser les composés liquides hors de ladite portion centrale (44, 104) du tube (4,10), la déformation de la paroi externe (42,102) du tube (4,10) étant effectuée par le déplacement par rapport au tube (4,10) d'un organe de compression (1,6,7) selon la direction transversale (43, 103), ledit organe de compression (1) comportant au moins une surface de contact (2,8,9) comprenant une portion inclinée (22, 23, 82, 92) par rapport à l'axe longitudinal (41, 101), la surface de contact (2, 8, 9) étant destinée à être mise en contact avec la paroi externe (42,102) du tube (4,10), et dont la forme est adaptée pour expulser les composés liquides hors de la portion centrale (44, 104) du tube (4,10).

2. Procédé selon la revendication précédente, dans lequel la déformation de la paroi externe (42,102) du tube (4,10) est effectuée de part et d'autre de la portion centrale (44, 104), de manière à expulser les composés liquides hors de ladite portion centrale (44, 104) dans une première direction d'expulsion (411,1011) et une deuxième direction d'expulsion (412,1012) opposées et colinéaires à l'axe longitudinal (41,101) du tube (4,10).

3. Procédé selon la revendication précédente, dans lequel la déformation de la paroi externe (42,102) du tube (4,10) est effectuée :
- dans un premier temps, d'un premier côté de la portion centrale (44, 104) afin d'expulser les composés liquides hors de ladite portion centrale (44, 104) dans la première direction d'expulsion (411,1011), et
- dans un deuxième temps, d'un deuxième côté de la portion centrale (44, 104) afin d'expulser les composés liquides hors de ladite portion centrale (44, 104) dans la deuxième direction d'expulsion (412,1012).

4. Machine de déconnexion mettant en œuvre un procédé de compression selon l'une quelconque des revendications précédentes, ladite machine de déconnexion comportant un dispositif chauffant (3) conçu pour faire fondre la portion centrale (44, 104) du tube (4,10), de manière à obturer ledit tube (4,10), une fois les composés liquides expulsés hors de la portion centrale (44, 104) dudit tube (4,10).

5. Machine de déconnexion selon la revendication précédente, comportant un organe de compression (1) déplaçable par rapport au tube (4,10) selon la direction transversale (43, 103) et présentant une surface de contact (2) destinée à être mise en contact avec la paroi externe (42,102) du tube (4,10), ladite surface de contact (2) comportant une première portion inclinée (22) et une deuxième portion inclinée (23) par rapport à l'axe longitudinal (41,101), adjacentes et disposées de manière que la surface de contact (2) présente une zone de premier contact (21) avec la paroi externe (42,102) du tube (4,10) située à la jonction de la première portion inclinée (22) et de la deuxième portion inclinée (23).

6. Machine de déconnexion selon la revendication précédente, dans laquelle la première portion inclinée (22) et la deuxième portion inclinée (23) sont disposées, selon l'axe longitudinal (41,101), de part et d'autre du dispositif chauffant (3).

7. Machine de déconnexion selon la revendication précédente, dans laquelle la première portion inclinée (22) et la deuxième portion inclinée (23) sont planes et symétriques par rapport à un plan de symétrie orthogonal à l'axe longitudinal (41,101) du tube (4,10).

8. Machine de connexion (5) mettant en œuvre un procédé de compression selon l'une quelconque des revendications 1 à 3, comportant une lame chauffante conçue pour faire fondre au moins partiellement et sectionner la portion de centrale du tube (4,10) une fois celle-ci déformée dans la direction transversale (43, 103).

9. Machine de connexion (5) selon la revendication précédente, comportant un premier organe de compression (6) et un deuxième organe de compression (7), déplaçables par rapport au tube (4,10) selon la direction transversale (43, 103) et étant conçus pour expulser les composés liquides hors de la portion centrale (44,104) respectivement selon une première direction d'expulsion (411,1011) et une deuxième direction d'expulsion (412,1012) opposées et colinéaires à l'axe longitudinal (41,101).

10. Machine de connexion (5) selon la revendication précédente, dans laquelle chacun du premier organe de compression (6) et du deuxième organe de compression (7) présente une surface de contact (8,9) destinée à être mise en contact avec la paroi externe (42,102) du tube (4,10), ladite surface de contact comportant :
- une zone de premier contact (81,91) avec la paroi externe (42,102) du tube (4,10), et
- une portion inclinée (82,92) par rapport à l'axe longitudinal (41,101), plane et juxtaposée à la zone de premier contact (81,91) respectivement selon la première direction d'expulsion (411,1011) et la deuxième direction d'expulsion, ladite portion inclinée (82,92) étant adaptée pour expulser les composés liquides hors de la portion centrale (44,104) respectivement selon ladite première direction d'expulsion (411,1011) et ladite deuxième direction d'expulsion (412,1012).

11. Machine de connexion (5) selon l'une quelconque des revendications 9 et 10, dans laquelle le premier organe de compression (6) et le deuxième organe de compression (7) sont symétriques par rapport à un plan orthogonal à l'axe longitudinal (41,101) du tube (4,10) et passant par la portion centrale (44, 104) dudit tube (4,10).

12. Machine de connexion (5) selon l'une quelconque des revendications 9 à 11, dans laquelle la surface de contact (8,9) du premier organe de compression (6) et/ou du deuxième organe de compression (7) présente un traitement de surface adapté pour diminuer l'intensité des frottements mécaniques entre lesdits premier organe de compression (6) et deuxième organe de compression (7) et la paroi externe (42,102) du tube (4,10).

13. Machine de connexion (5) selon l'une quelconque des revendications 9 à 12, dans laquelle la surface de contact (8,9) du premier organe de compression (6) et/ou du deuxième organe de compression (7) présente un traitement de surface adapté pour diminuer l'effusivité thermique desdits premier organe de compression (6) et deuxième organe de compression (7).
